# NOUVEAU FASCICULE DE BREVET EUROPEEN

(11) **EP 3 578 760 B2**
(45) Date de publication et mention de la décision concernant l'opposition: **11.10.2023**
(45) Mention de la délivrance du brevet: 18.11.2020
(21) Numéro de dépôt: 19176673.2
(22) Date de dépôt: 27.05.2019
(51) Int. Cl.: F01D 5/28, F01D 21/04, F01D 11/12

(54) **AUBE DE SOUFFLANTE EN MATÉRIAU COMPOSITE AVEC GRAND JEU INTÉGRÉ**
EINE FANSCHAUFEL AUS VERBUNDWERKSTOFF MIT GROSSEM SPIEL
A COMPOSITE MATERIAL FAN BLADE INTEGRATING LARGE CLEARANCE

(30) Priorité: 05.06.2018 FR 1870650
(43) Date de publication de la demande: 11.12.2019
(73) Titulaire: SAFRAN AIRCRAFT ENGINES, 75015 Paris (FR)
(72) Inventeur: DE SPIEGELEER, Guy, 77550 MOISSY-CRAMAYEL (FR)
(74) Mandataire: Cabinet Beau de Loménie

(56) Documents cités:
- EP-A1- 3 015 646
- EP-A1- 3 279 431
- WO-A1-2012/001279
- US-A1- 2005 106 002
- US-A1- 2006 216 154
- US-A1- 2013 224 035
- US-A1- 2014 112 796
- US-A1- 2016 230 570

## Description

### Arrière-plan de l'invention

La présente invention se rapporte au domaine général des turbomachines d'aéronef, et plus particulièrement des soufflantes des turbomachines d'aéronef.

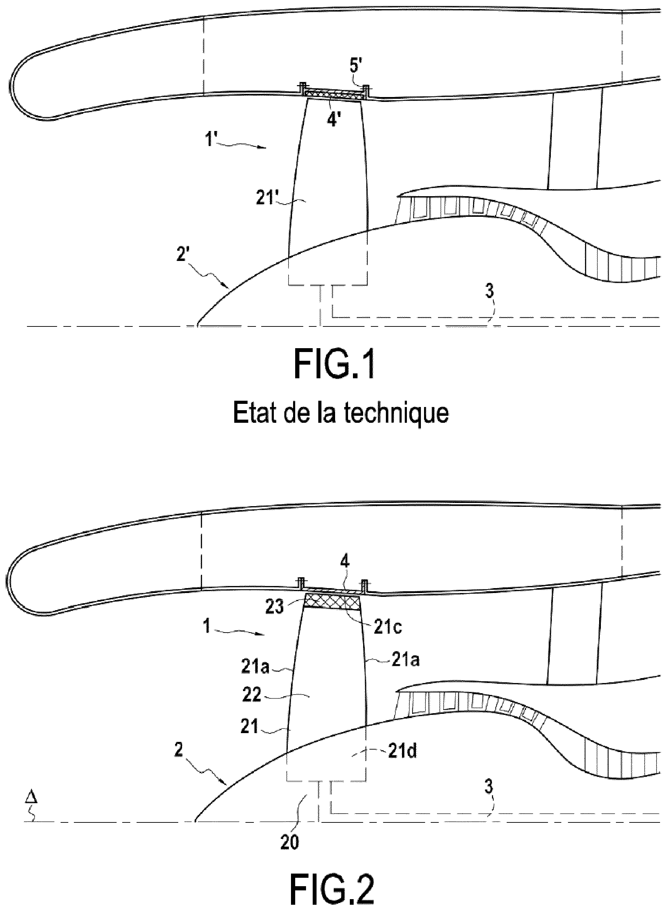

Comme cela est représenté sur la figure 1, une turbomachine 1' d'aéronef comprend une soufflante 2', la soufflante 2' étant l'hélice de grand diamètre située en entrée de la turbomachine qui est entrainée en rotation par l'arbre basse pression de ladite turbomachine 1'.

Dans le cas d'une perte d'une aube 21' de la soufflante 2', par exemple à cause d'une percussion d'un corps étranger sur ladite soufflante 2', il est généralement prévu un découpleur sur l'arbre de la soufflante 3' afin de limiter les charges mécaniques provoquée par le balourd engendrée par la rotation de la soufflante 2' avec une aube 21' en moins. Un découpleur est un pallier de fixation de l'arbre de la soufflante 3' sacrificiel qui est prévu pour se rompre lorsque les charges mécaniques deviennent trop importantes, afin de permettre à l'arbre de la soufflante 3' de se décentrer et ainsi de limiter les contraintes mécaniques imposées à l'arbre de la soufflante 3' et transmises aux structures porteuses de la turbomachine.

Ainsi, afin de permettre à la soufflante 2' de continuer de tourner, pour que la turbomachine 1' continue de tourner, lorsque l'arbre de la soufflante 3' est décentré, une zone de faiblesse, appelée grand jeu 4', est prévue sur le contour interne du carter de soufflante 5'. Cette zone de faiblesse, ou grand jeu 4', est configurée pour s'effacer lors d'un contact avec une aube 21', et ainsi permettre à l'aube 21' de continuer sa rotation. Le grand jeu 4' forme également une zone sur laquelle la turbomachine ne doit pas contenir d'équipement car un équipement situé sur le grand jeu 4' est susceptible d'être percuté par une aube 1'.

On connait le document EP1312762 de la Demanderesse qui décrit une aube de soufflante comprenant une zone de faiblesse à son sommet de manière à rompre lorsque le sommet de l'aube percute le carter de soufflante. Cette solution permet de réduire l'épaisseur du carter de soufflante et d'augmenter le diamètre de la soufflante.

Toutefois, la solution décrite dans ce document EP1312762 est complexe à réaliser, impacte négativement l'état de surface de l'aube, et n'est pas adaptée pour des aubes de soufflante en composite à renfort fibreux.

On connaît également le document WO2012/001279 qui décrit une aube en matériaux composite destinée à être montée sur un turbopropulseur.

### Objet et résumé de l'invention

La présente invention a donc pour but principal de pallier de tels inconvénients en proposant une soufflante.

Selon un premier aspect l'invention propose une aube d'une soufflante selon la revendication 1.

Une telle aube de soufflante comprend ainsi une couche en matériau sacrificiel à son sommet formée par la deuxième portion, qui est configurée pour se retirer en cas de contact avec le carter de la soufflante, formant ainsi le grand jeu. Le retrait de la couche en matériau sacrificiel au sommet de l'aube est réalisé par une usure très rapide ou par une décomposition de ladite couche en matériau sacrificiel.

Le fait que la matrice de l'aube soit, au sommet de l'aube, dans le deuxième matériau qui est un matériau plus fragile que premier matériau, permet de former une aube de soufflante en composite à renfort fibreux qui possède une zone sacrificielle à son sommet de sorte à former le grand jeu.

En outre, le fait que le grand jeu soit formé par une matrice renforcée par un renfort fibreux permet d'assurer au grand jeu une bonne tenue mécanique aux contraintes mécaniques auxquelles est soumise l'extrémité annulaire externe de la pale.

L'aube peut en outre comprendre la caractéristique suivante le sommet de l'aube est recouvert par une couche d'un troisième matériau qui possède une résistance à l'abrasion inférieure à celle du deuxième matériau.

Selon un deuxième aspect, l'invention propose une turbomachine comprenant une aube selon l'une quelconque des caractéristiques précédentes.

La turbomachine peut en outre comprendre les caractéristiques suivantes :
- la turbomachine comprend un carter de soufflante comprenant une surface annulaire interne qui possède une résistance à l'abrasion supérieure à celle du deuxième matériau ;
- la soufflante est entrainée en rotation par un arbre, l'arbre étant fixé à la turbomachine par un palier principal, l'arbre étant également fixé à la turbomachine par un palier découpleur qui comprend une limite à la rupture inférieure à celle du palier principal.

Selon un troisième aspect l'invention propose un procédé de fabrication d'une aube selon la revendication 5.

Le procédé peut en outre comprendre les caractéristiques suivantes, prises seules ou en combinaison suivant les possibilités techniques :
- la première portion est fabriquée par densification avec la première matrice d'une première zone d'une préforme fibreuse formant le premier renfort fibreux, la première zone s'étendant à une première extrémité de la préforme fibreuse qui correspond au pied de l'aube, et dans lequel la deuxième portion est fabriquée par densification avec la deuxième matrice d'une deuxième zone de la préforme fibreuse formant le deuxième renfort fibreux, la deuxième zone s'étendant à une deuxième extrémité de la préforme fibreuse qui correspond au sommet de l'aube;
- la préforme fibreuse est densifiée par la première matrice sur toute sa longueur, puis la première matrice est éliminée sur la deuxième zone de la préforme fibreuse, puis ladite deuxième zone de ladite préforme fibreuse est densifiée avec la deuxième matrice après l'élimination de la première matrice ;
- une couche d'un troisième matériau qui possède une résistance à l'abrasion inférieure à celle du deuxième matériau est déposée au sommet de l'aube.

### Brève description des dessins

[Fig.1] représente une vue schématique en coupe d'une soufflante selon l'état de la technique ;
[Fig.2] représente une vue schématique en coupe d'une soufflante selon un mode de réalisation de l'invention ;
[Fig.3A] représente une vue de face schématique de la soufflante selon la figure 2 lors d'un fonctionnement normal de la turbomachine ;
[Fig.3B] représente une vue de face schématique de la soufflante selon la figure 2 lors d'un décentrage de ladite soufflante ;
[Fig.4] représente une aube selon mode de réalisation possible de l'invention ;
[Fig.5] représente schématiquement les étapes d'un procédé de fabrication d'une aube selon l'invention ;
[Fig.6A] représente une première étape d'une première variante d'un procédé de fabrication d'une aube selon une mise en œuvre possible de l'invention ;
[Fig.6B] représente une deuxième étape d'une première variante d'un procédé de fabrication d'une aube selon une mise en œuvre possible de l'invention ;
[Fig.6C] représente une troisième étape d'une première variante d'un procédé de fabrication d'une aube selon une mise en œuvre possible de l'invention ;
[Fig.6D] représente une quatrième étape d'une première variante d'un procédé de fabrication d'une aube selon une mise en œuvre possible de l'invention ;
[Fig.6E] représente une cinquième étape d'une première variante d'un procédé de fabrication d'une aube selon une mise en œuvre possible de l'invention ;
[Fig.6F] représente une sixième étape d'une première variante d'un procédé de fabrication d'une aube selon une mise en œuvre possible de l'invention ;
[Fig.6G] représente une septième étape d'une première variante d'un procédé de fabrication d'une aube selon une mise en œuvre possible de l'invention ;
[Fig.7A] représente une première étape d'un procédé de fabrication d'une aube hors invention ;
[Fig.7B] représente une deuxième étape d'un procédé de fabrication d'une aube hors invention;
[Fig.7C] représente une troisième étape d'un procédé de fabrication d'une aube hors invention ;
[Fig.7D] représente une quatrième étape d'un procédé de fabrication d'une aube hors invention ;
[Fig.7E] représente une cinquième étape d'un procédé de fabrication d'une aube hors invention

### Description détaillée de l'invention

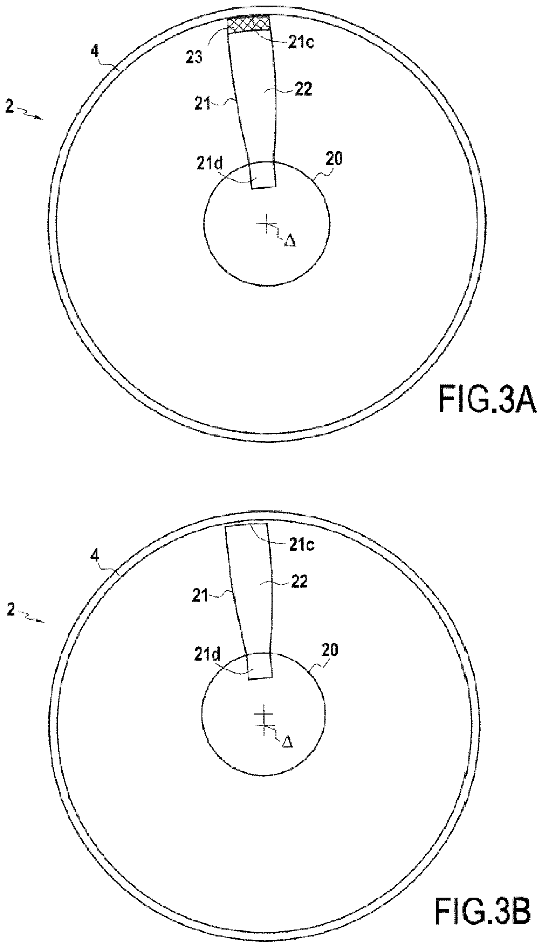

Comme illustré sur les figures 2, 3A et 3B, une turbomachine 1 comprend une soufflante 2 qui comprend une pluralité d'aube 21. Une unique aube 21 étant représentée sur les figures à des fins de simplification. La soufflante 2 est entrainée en rotation autour de l'axe Δ de la turbomachine 1 par un arbre de soufflante 3. L'arbre de soufflante 3 peut être formé par l'arbre basse pression de la turbomachine 1, ou l'arbre de soufflante 3 peut être entrainé en rotation par l'arbre basse pression via un réducteur.

L'arbre de soufflante 3 est fixé au reste de la turbomachine 1 par des paliers permettant la rotation dudit arbre de soufflante. Parmi les paliers de fixation de l'arbre de soufflante 3, la turbomachine comprend au moins un palier principal et au moins un palier découpleur, ledit au moins un palier découpleur comprenant une limite à la rupture inférieure audit au moins un palier principal. Ainsi, le, ou les paliers découpleurs servent de paliers sacrificiels qui se rompent sous l'effet du balourd provoqué par la perte d'une aube 21.

La soufflante 2 est entourée sur tout son contour par un carter de soufflante 4. Le carter de soufflante 4 est une pièce annulaire centrée sur l'axe Δ la turbomachine. Le diamètre de la surface annulaire interne du carter de soufflante 4 est presque égal au diamètre de la soufflante 2 afin de réduire la circulation d'écoulements parasites entre la soufflante 2 et le carter de soufflante 4. Le carter de soufflante 4 peut être une pièce métallique ou en céramique.

Les aubes 21 de la soufflante 2 sont en un matériau composite comprenant des fibres, par exemple des fibres de carbone qui sont densifiées par une matrice organique. Les fibres sont tissées, le tissage pouvant être un tissage tridimensionnel. Par « tissage tridimensionnel » ou « tissage 3D » ou encore « tissage multicouche », on entend ici un mode de tissage par lequel certains au moins des fils de trame lient des fils de chaîne sur plusieurs couches de chaîne, ou inversement, suivant un tissage correspondant à une armure de tissage, ladite armure de tissage pouvant être notamment choisie parmi une des armures suivantes : interlock, multi-toile, multi-satin et multi-sergé.

Les aubes 21 comprennent un bord d'attaque 21a, un bord de fuite 21b, un sommet 21c et un pied 21d. Le sommet 21c des aubes 21 est l'extrémité située radialement à l'extérieur par rapport à l'axe Δ en regard du carter de soufflante 4, tandis que le pied 21d des aubes 21 est l'extrémité située radialement vers l'intérieur par rapport audit axe Δ et qui est fixée à un moyeu de soufflante 20.

Les aubes 21 comprennent une première portion 22 s'étendant depuis le pied 21d selon la direction principale d'élongation de l'aube 21, et une deuxième portion 23 s'étendant depuis le sommet 21c selon ladite direction principale d'élongation de l'aube 21. La première portion 22 et la deuxième portion 21 sont en contact l'une avec l'autre.

La première portion 22 des aubes 21 est formée par un premier matériau qui comprend un premier renfort fibreux densifié par une première matrice, tandis que la deuxième portion 23 des aubes 21 est formée par un deuxième matériau qui comprend un deuxième renfort fibreux densifié par une deuxième matrice.

Le deuxième matériau de la deuxième portion 23 possède une résistance à l'abrasion qui est inférieure à la résistance à l'abrasion du premier matériau de la première portion 22. La résistance à l'abrasion du premier matériau et du deuxième matériau est considérée lorsque la première matrice et la deuxième matrice sont solidifiées. La deuxième portion 23 est ainsi une zone de faiblesse formant le grand jeu afin de permettre à la soufflante 2 de continuer de tourner même en étant désaxée par rapport à l'axe Δ. Lorsque la soufflante 2 est désaxée par rapport à l'axe Δ, la deuxième portion 22 des aubes 21 viennent frotter contre la surface annulaire interne du carter de soufflante 4, provoquant ainsi le retrait d'au moins une partie de la deuxième portion 23, la surface annulaire interne du carter de soufflante 4 possédant une résistance à l'abrasion supérieure au deuxième matériau.

Ainsi, comme illustré sur la figure 3A, lors d'un fonctionnement normal de la soufflante 2, c'est-à-dire lorsque la rotation de ladite soufflant 2 est axée sur l'axe Δ de la turbomachine 1, la deuxième portion 23 des aubes 21 reste à distance du carter de soufflante 4 et ainsi reste intacte. Ainsi, par rapport à une soufflante de l'état de la technique, le diamètre de la soufflante 2 est augmenté sans augmenter le diamètre du carter de soufflante 2. Ainsi, le taux de dilution (BPR pour « Bypass ratio » selon la terminologie anglo-saxonne) de la turbomachine 1 peut être augmenté sans augmenter le poids de ladite turbomachine 1.

Comme illustré sur la figure 3B, lorsque la soufflante 2 perd une aube 21, ladite soufflante 2 se décentre de l'axe Δ de la turbomachine 1, le sommet 21c de l'aube 21 vient frotter contre le carter de soufflante 4, usant et provoquant ainsi le retrait du deuxième matériau de la deuxième portion 23.

Le fait que le deuxième matériau possède une résistance à l'abrasion inférieure à celle du premier matériau permet d'assurer que l'aube 21 s'use au niveau de la deuxième portion 23 et que l'aube 21 ne se rompe pas au niveau de la première zone 22 lorsque le sommet 21c de l'aube 21 rentre en contact avec le carter de soufflante 4 suite au désaxement de la soufflante 2 par rapport à l'axe Δ.

La différence de résistance à l'abrasion entre le premier matériau et le deuxième matériau peut être obtenue par plusieurs modes de réalisations possibles.

Le deuxième matériau de la deuxième portion 23 est rendu plus faible par utilisation d'une première matrice et d'une deuxième matrice qui possèdent des compositions différentes, ou autrement dit la première matrice et la deuxième matrice sont dans des matériaux différents, la deuxième matrice possédant une résistance à l'abrasion inférieure à celle de la première matrice.

Le premier renfort fibreux de la première portion 22 et le deuxième renfort fibreux de la deuxième portion 23 sont formés par une même préforme fibreuse qui peut être tissée, de préférence par tissage tridimensionnel. Le premier renfort fibreux correspond à la partie de la préforme fibreuse située au pied 21d de l'aube 21, la partie de la préforme fibreuse située au niveau de la première portion 22, et le deuxième renfort fibreux correspond à la partie de la préforme fibreuse située au sommet 21c de l'aube 23, la partie de la préforme fibreuse située au niveau de la deuxième portion 23.

Dans ce premier mode de réalisation, la première matrice peut être typiquement une résine classiquement utilisée pour réaliser les matrices des aubes de soufflante, comme une résine époxy, et la deuxième matrice peut par exemple être une résine polyuréthane semi-rigide « smooth cast 65D ». La préforme fibreuse tissée peut quant à elle est en fils de carbone.

Pour le premier mode de réalisation, comme illustré sur la figure 3B, lorsque la soufflante 2 perd une aube 21, ladite soufflante 2 se décentre de l'axe Δ de la turbomachine 1, le sommet 21c de l'aube 21 vient frotter contre le carter de soufflante 4, usant ainsi la deuxième matrice du deuxième matériau de la deuxième portion 23. Une fois la deuxième matrice de la deuxième portion 23 de l'aube 21 éliminée, au moins partiellement, le deuxième renfort fibreux initialement densifié par la deuxième matrice est mise à nue et vient frotter contre le carter de soufflante 4, limitant ainsi le passage des écoulements parasites entre le sommet 21c des aubes 21 et le carter d'échappement 4.

Selon un deuxième mode de réalisation non revendiqué, la différence de résistance à l'abrasion entre le premier matériau et le deuxième matériau est obtenue en jouant sur les premier et deuxième renforts fibreux.

Dans ce deuxième mode de réalisation non revendiqué, le premier renfort fibreux est formé par une préforme fibreuse tissée, de préférence selon un tissage tridimensionnel, qui est noyée dans la première matrice, tandis que le deuxième renfort fibreux est formé par des fibres courtes noyées dans la deuxième matrice.

Les fibres courtes présentent une longueur comprise entre 50 µm et 5000 µm, ou plus préférentiellement une longueur comprise entre 100 µm et 300 µm.

La préforme fibreuse formant le premier renfort fibreux et le les fibres courtes formant le deuxième renfort fibreux peuvent être par exemple en fibres de carbone.

Le deuxième mode de réalisation offre l'avantage d'apporter une différence de résistance à l'abrasion entre le premier matériau et le deuxième matériau plus importante que par rapport au premier mode de réalisation, les renforts fibreux possédant un rôle très important dans la résistance à l'abrasion.

La première matrice et la deuxième matrice peuvent posséder une même composition (hors invention), autrement dit la première matrice et la deuxième matrice sont dans le même matériau, ce qui permet de simplifier la fabrication de l'aube 21. La première matrice et la deuxième matrice du deuxième mode de réalisation peuvent être identiques à la première matrice du premier mode de réalisation.

La première matrice et la deuxième matrice ont des compositions différentes, la deuxième matrice possédant une résistance à l'abrasion inférieure à celle de la première matrice, de sorte à réduire encore plus la résistance à l'abrasion de la deuxième portion 23. La première matrice du deuxième mode de réalisation peut être identique à la première matrice du premier mode de réalisation, tandis que la deuxième matrice du deuxième mode de réalisation peut être identique à la deuxième matrice du premier mode de réalisation.

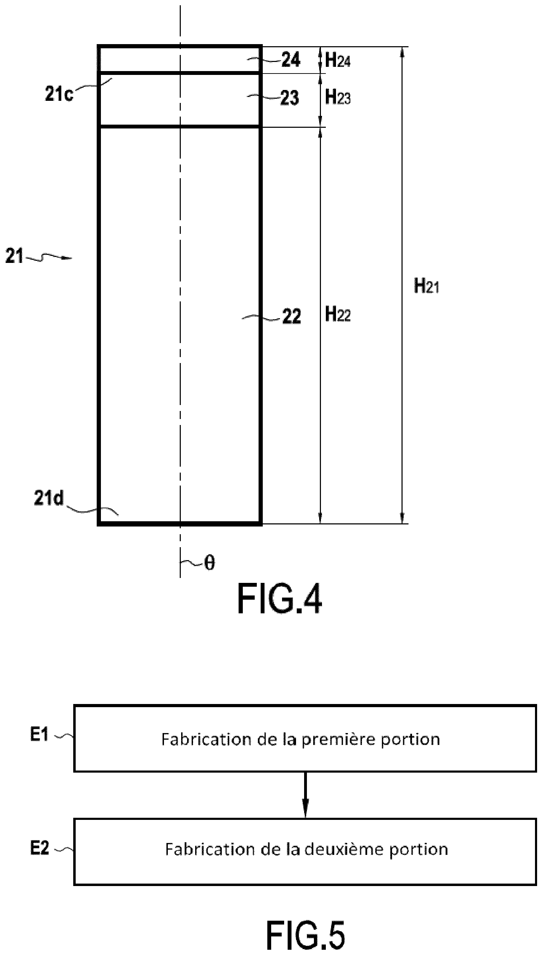

Comme illustré sur la figure 4, l'aube 21 comprend un axe principal d'élongation θ, qui est perpendiculaire à l'axe Δ de la turbomachine 2. L'aube 21 comprend une hauteur totale H₂₁ qui correspond à la dimension de l'aube 21 suivant l'axe principal d'élongation θ. La première portion 22 comprend une première hauteur H₂₂, la deuxième portion 23 comprend une deuxième hauteur H₂₃. La première hauteur H₂₂ est comprise entre 90% et 99% de la hauteur totale H₂₁, et la deuxième hauteur H₂₃ est comprise entre 1% et 10%. De préférence, la deuxième hauteur H₂₃ de la hauteur totale H₂₁ est comprise entre 2% et 5% de la hauteur totale H₂₁ de l'aube 21. De tels ratios entre la première hauteur H₂₂ et la deuxième hauteur H₂₃ de la deuxième portion 23 permettent d'assurer un bon décalage pour la soufflante 2 afin de minimiser le balourd provoqué par la perte d'une aube 21.

Selon un mode de réalisation possible, le sommet 21c de l'aube 21 peut être recouvert par une couche 24 d'un troisième matériau qui possède une résistance à l'abrasion inférieure à celle du deuxième matériau. Cette couche 24 forme une couche d'abradable qui est configurée pour s'user par abrasion lors de contacts avec le carter de soufflante 4. La couche 4 est érodée par les contacts du sommet de l'aube 21 avec le carter de soufflante 4, permettant ainsi de limiter au maximum l'espace entre le sommet de l'aube 21 et le carter de soufflante 4. Dans ce mode de réalisation, la deuxième portion 23 est située entre la première portion 22 et la couche 24, et est en contact avec ladite première portion 22 et la couche 24. Un tel mode de réalisation offre l'avantage de limiter la quantité de matériau abradable utilisée (le troisième matériau), et ainsi réduit la masse de la turbomachine 1. La couche 24 est éliminée avec la deuxième portion 23 lors du décentrage de la soufflante 2 suite à la perte d'une aube 21.

Selon un autre mode de réalisation possible, la surface annulaire interne du carter de soufflante 4 est recouverte par une couche du troisième matériau afin de former une couche d'abradable destinée à s'user par abrasion au contact du deuxième matériau de la matrice de la deuxième portion 23 située au sommet 21c de l'aube 21. Lors de la perte d'une aube 21 et du décentrage de la soufflante 2, cette couche d'abradable est éliminée par le frottement avec la deuxième portion 23 de l'aube 21. Puis, une fois cette couche d'abradable éliminée, la matrice de la deuxième portion 23 est éliminée son tour lorsque ladite deuxième portion 23 rentre en contact avec la surface annulaire interne en du carter de soufflante 4.

Comme illustré sur la figure 5, selon une mise en œuvre possible, l'aube 21 selon l'invention est fabriquée suivant un procédé de fabrication comprenant les étapes suivantes :
- E1 : fabrication de la première portion 22 de l'aube 21, ladite première portion s'étendant au pied 21d de l'aube 21 et étant formée par le premier matériau, ledit premier matériau comprenant le premier renfort fibreux densifié par la première matrice ;
- E2 : fabrication de la deuxième portion 23 de l'aube 21, ladite deuxième portion s'étendant au sommet 21c de l'aube 21 et étant formée par le deuxième matériau, ledit deuxième matériau comprenant le deuxième renfort fibreux densifié par la deuxième matrice, ledit deuxième matériau possédant une résistance à l'abrasion inférieure à celle du premier matériau.

Plusieurs variantes sont possibles pour fabriquer la première portion 22 et la deuxième portion 23.

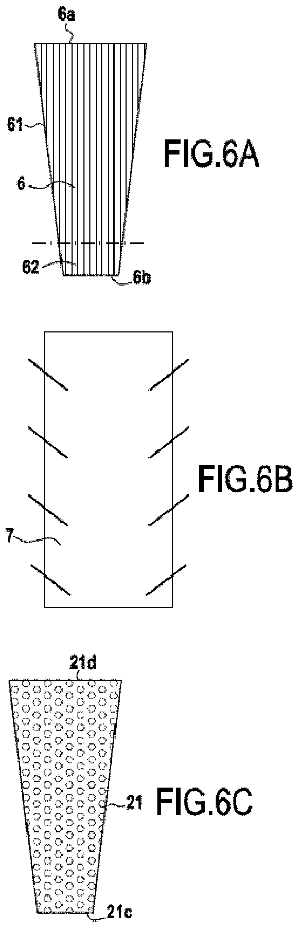

Suivant une première variante de fabrication possible illustrée sur la figure 6A permettant de fabriquer l'aube 21 selon le premier mode de réalisation, la première portion 22 est fabriquée par densification d'une première zone 61 d'une préforme fibreuse 6 tissée, et la deuxième portion 23 est fabriquée par densification d'une deuxième zone 62 de la préforme tissée 6. La première zone 61 de la préforme fibreuse 6 est située à une première extrémité 6a de ladite préforme 6, la deuxième zone 62 de la préforme fibreuse 6 est située à une deuxième extrémité 6b de ladite préforme 6, la deuxième extrémité 6b étant opposée à la première extrémité 6a. La première extrémité 6a correspond au pied 21d de l'aube 21, et la deuxième extrémité 6b correspond au sommet 21c de l'aube 21.

La densification de la première zone 61 de la préforme fibreuse 6 est réalisée par la première matrice, la première zone 61 de ladite préforme fibreuse 6 formant le premier renfort du premier matériau. La densification de la deuxième zone 62 de la préforme fibreuse est quant à elle réalisée par la deuxième matrice, la deuxième zone 62 de ladite préforme fibreuse formant le deuxième renfort fibreux du deuxième matériau. Les compositions de la première matrice et de la deuxième matrice sont différentes, et la deuxième matrice comprend une résistance à l'abrasion inférieure à celle de la première matrice.

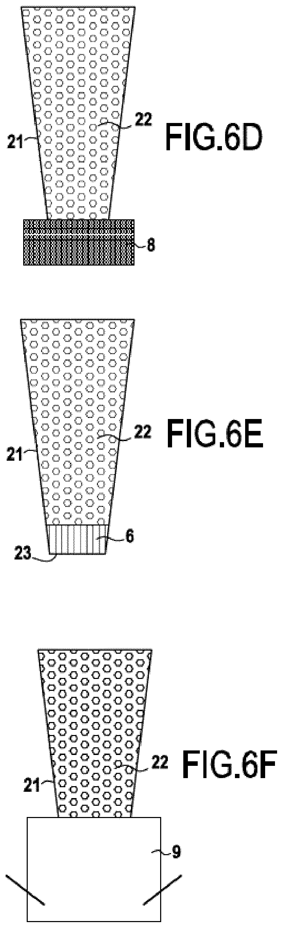

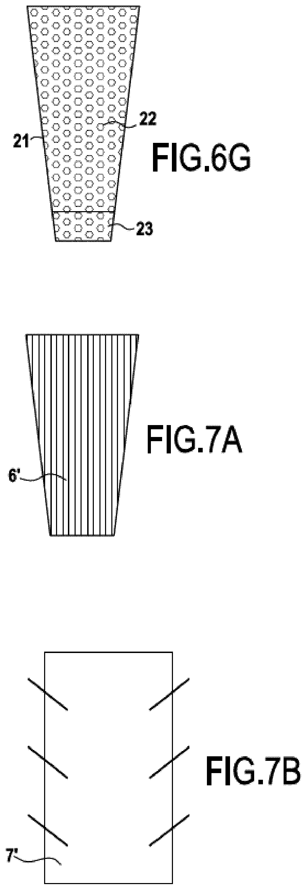

Une mise en œuvre possible de la première variante du procédé de fabrication de l'aube 21 illustrée sur les figures 6A-6G, le procédé de fabrication peut comprendre les étapes suivantes :
- La préforme fibreuse 6 est réalisée, par exemple par tissage 3d de fibres, comme illustrée sur la figure 6A.
- La préforme fibreuse 6 est ensuite densifiée sur toute sa longueur par la première matrice, comme cela est illustré sur la figure 6B. Pour ce faire, toute la préforme fibreuse est disposée dans un premier moule 7 dans lequel un matériau précurseur de la première matrice est injecté et est polymérisé.
- Suite à la densification de la préforme fibreuse 6 par la première matrice, il est obtenu une aube 21 avec un renfort fibreux, de préférence tissé 3D, intégralement densifié par la première matrice, comme illustré sur la figure 6C.
- La première matrice est ensuite éliminée sur la deuxième portion 23 de l'aube 21. Pour ce faire, la deuxième portion 23 de l'aube 21 qui s'étend depuis le sommet 21c de l'aube 21 est plongée dans un bassin 8 qui comprend un liquide dans lequel la première matrice est dissoute, comme illustré sur la figure 6D. La première portion 22 de l'aube 21 reste quant à elle en dehors du bassin 8.
- Suite l'élimination de la première matrice sur la deuxième portion 23 de l'aube 21, la préforme fibreuse 6 est nue sur ladite deuxième portion 23, comme illustré sur la figure 6E.
- La préforme fibreuse 6 est ensuite densifiée sur la deuxième zone 23 de l'aube 21 avec la deuxième matrice. Pour ce faire, comme cela est illustré sur la figure 6F, la deuxième zone 23 de l'aube 21 est disposé dans un deuxième moule 9, un matériau précurseur de la deuxième matrice est injecté dans la préforme fibreuse 6 puis est polymérisé.
- Comme illustré sur la figure 6G, suite à la densification de la deuxième portion 23 de l'aube 21 avec la deuxième matrice, l'aube 21 comprend la première zone 22 avec une première matrice, et la deuxième zone 23 avec une deuxième matrice qui possède une résistance à l'abrasion inférieure à ce de ladite première matrice.

Selon une autre variante possible, la préforme fibreuse 6 est densifiée par la première matrice uniquement sur la première portion 22, le procédé ne comprenant pas d'étape d'élimination de la première matrice sur la deuxième portion 23. Pour ce faire, seule la première zone 61 de la préforme fibreuse 6 est installée dans le premier moule 7 afin d'être densifiée par le premier matériau, la deuxième zone 62 restant à l'extérieur dudit premier moule 7.

Suivant une deuxième variante de fabrication possible permettant de fabriquer l'aube 21 selon le deuxième mode de réalisation, et qui est illustrée sur les figures la première portion 22 de l'aube 21 est fabriquée par densification d'une préforme fibreuse 6' sur toute sa longueur. La densification de la préforme fibreuse 6' est réalisée par la première matrice. La préforme fibreuse 6' densifiée forme uniquement le premier renfort fibreux du premier matériau de la première portion 22 de l'aube 21.

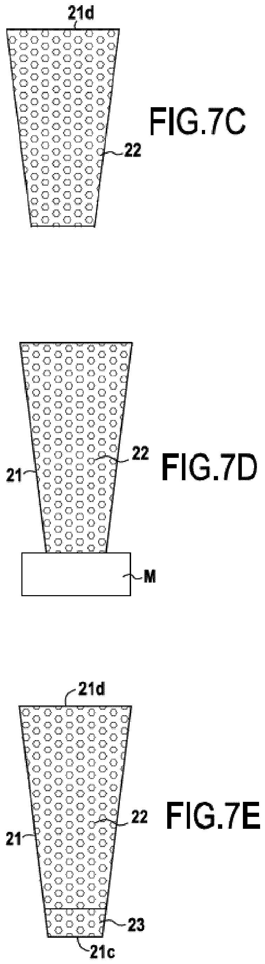

La préforme fibreuse 6' est réalisée, par exemple par tissage 3d de fibres, comme illustrée sur la figure 7A. La préforme fibreuse 6' est ensuite densifiée sur toute sa longueur par la première matrice, comme cela est illustré sur la figure 7B. Pour ce faire, toute la préforme fibreuse 6' est disposée dans un premier moule 7' dans lequel un matériau précurseur de la première matrice est injecté et est polymérisé. La pièce obtenue et qui est illustrée à la figure 7C correspond à la première portion 22 de l'aube 21, la première portion 22 formant la partie inférieure de ladite aube 21 qui s'étend au pied 21d de ladite aube 21.

En outre la deuxième portion 23 de l'aube 21 est fabriquée par moulage, sur une extrémité de la préforme fibreuse 6', de la deuxième matrice dans laquelle sont dispersées des fibres courtes qui forment le deuxième renfort fibreux. Cette étape est illustrée à la figure 7D, le moulage de la deuxième portion 23 étant réalisée par un moule M. Comme illustré sur la figure 7E, à la suite de l'étape de moulage de la deuxième matrice dans laquelle sont dispersées les fibres courtes formant le deuxième renfort fibreux, l'aube 21 obtenue possède d'une part la première portion 22 au pied 21d de ladite aube 21 qui est formée du premier matériau, et d'autre part la deuxième portion au sommet 21c de ladite aube 21 qui est formée du deuxième matériau.

De plus, selon une variante possible, la couche 24 du troisième matériau peut être déposée au sommet 21c de l'aube 21, par-dessus la deuxième portion 22.

## Revendications

1. Aube (21) d'une soufflante (2) d'une turbomachine (1) en matériau composite, l'aube (21) comprenant une première portion (22) qui s'étend au pied (21d) de l'aube (21) et qui est formée en un premier matériau comprenant un premier renfort fibreux densifié par une première matrice, l'aube (21) comprenant également une deuxième portion (23) qui s'étend au sommet (21c) de l'aube (21) et qui est formée en un deuxième matériau différent du premier matériau et qui comprend un deuxième renfort fibreux densifié par une deuxième matrice, **caractérisé en ce que** le deuxième matériau présente une résistance à l'abrasion inférieure à celle du premier matériau, **en ce que** le premier renfort fibreux et le deuxième renfort fibreux sont formés par une même préforme fibreuse (6), **en ce que** la première et la deuxième matrice possèdent une composition différente et la deuxième matrice possède une résistance à l'abrasion inférieure à celle de la première matrice et **en ce que** la deuxième portion (23) comprend une hauteur (H₂₃) comprise entre 1% et 10% de la hauteur (H₂₁) de l'aube (21), et de préférence entre 2% et 5 % de la hauteur de l'aube.

2. Turbomachine (1) comprenant une soufflante (2) qui comprend une aube (21) selon la revendication 1.

3. Turbomachine (1) selon la revendication 2, dans laquelle ladite turbomachine (1) comprend un carter de soufflante (4) comprenant une surface annulaire interne qui possède une résistance à l'abrasion supérieure à celle du deuxième matériau.

4. Turbomachine (1) selon l'une quelconque des revendications 2 ou 3, dans lequel la soufflante (2) est entraînée en rotation par un arbre (3), l'arbre (3) étant fixé à la turbomachine (1) par un palier principal, l'arbre (3) étant également fixé à la turbomachine (1) par un palier découpleur qui comprend une limite à la rupture inférieure à celle du palier principal.

5. Procédé de fabrication d'une aube (21) selon la revendication 1comprenant les étapes suivantes :
- (E1) : fabrication de la première portion (22) de l'aube (21) qui s'étend au pied (21d) de l'aube (21) et qui est formée par le premier matériau qui comprend le premier renfort fibreux densifié par la première matrice ;
- (E2) : fabrication de la deuxième portion (23) de l'aube (21) qui s'étend au sommet (21c) de l'aube (21) et qui est formée par le deuxième matériau qui comprend le deuxième renfort fibreux densifié par la deuxième matrice, le deuxième matériau possédant une résistance à l'abrasion inférieure à celle du premier matériau, le premier renfort fibreux et le deuxième renfort fibreux étant formés par une même préforme fibreuse (6) et la première matrice et la deuxième matrice possédant une composition différente, la deuxième matrice possédant une résistance à l'abrasion inférieure à celle de la première matrice, et la deuxième portion (23) comprenant une hauteur (H₂₃) comprise entre 1% et 10% de la hauteur (H₂₁) de l'aube (21), et de préférence entre 2% et 5 % de la hauteur de l'aube.

6. Procédé selon la revendication 5, dans lequel la première portion (22) est fabriquée par densification avec la première matrice d'une première zone (61) de la préforme fibreuse (6) formant le premier renfort fibreux, la première zone (61) s'étendant à une première extrémité (6a) de la préforme fibreuse (6) qui correspond au pied (21d) de l'aube (21), et dans lequel la deuxième portion (23) est fabriquée par densification avec la deuxième matrice d'une deuxième zone (62) de la préforme fibreuse (6) formant le deuxième renfort fibreux, la deuxième zone (62) s'étendant à une deuxième extrémité (6b) de la préforme fibreuse (6) qui correspond au sommet (21c) de l'aube (21).

7. Procédé selon la revendication 6, dans lequel la préforme fibreuse (6) est densifiée par la première matrice sur toute sa longueur, puis la première matrice est éliminée sur la deuxième zone (62) de la préforme fibreuse (6), puis ladite deuxième zone (62) de ladite préforme fibreuse (6) est densifiée avec la deuxième matrice après l'élimination de la première matrice.

## Patentansprüche

1. Schaufel (21) eines Gebläses (2) einer Turbomaschine (1) aus Verbundwerkstoff, wobei die Schaufel (21) einen ersten Abschnitt (22) aufweist, der sich am Fuß (21d) der Schaufel (21) erstreckt und der aus einem ersten Werkstoff gebildet ist, der eine durch eine erste Matrix verdichtete erste Faserverstärkung umfasst, wobei die Schaufel (21) auch einen zweiten Abschnitt (23) umfasst, der sich an der Spitze (21c) der Schaufel (21) erstreckt und der aus einem zweiten Werkstoff gebildet ist, der von dem ersten Werkstoff verschieden ist und der eine durch eine zweite Matrix verdichtete zweite Faserverstärkung umfasst, **dadurch gekennzeichnet, dass** der zweite Werkstoff eine geringere Abriebfestigkeit als der erste Werkstoff aufweist, dass die erste Faserverstärkung und die zweite Faserverstärkung durch einen gleichen Faservorformling (6) gebildet sind, dass die erste und die zweite Matrix eine unterschiedliche Zusammensetzung aufweisen und die zweite Matrix eine geringere Abriebfestigkeit als die erste Matrix aufweist und dass der zweite Abschnitt (23) eine Höhe (H₂₃) zwischen 1 % und 10 % der Höhe (H₂₁) der Schaufel (21) und bevorzugt zwischen 2 % und 5 % der Höhe der Schaufel aufweist.

2. Turbomaschine (1), umfassend ein Gebläse (2), das eine Schaufel (21) nach Anspruch 1 umfasst.

3. Turbomaschine (1) nach Anspruch 2, wobei die Turbomaschine (1) ein Gebläsegehäuse (4) umfasst, das eine ringförmige Innenfläche aufweist, die eine höhere Abriebfestigkeit als der zweite Werkstoff aufweist.

4. Turbomaschine (1) nach einem der Ansprüche 2 oder 3, bei der das Gebläse (2) durch eine Welle (3) drehangetrieben wird, wobei die Welle (3) durch ein Hauptlager an der Turbomaschine (1) befestigt ist, wobei die Welle (3) durch ein Entkopplungslager, das eine geringere Bruchgrenze als das Hauptlager aufweist, ebenfalls an der Turbomaschine (1) befestigt ist.

5. Verfahren zur Herstellung einer Schaufel (21) nach Anspruch 1, umfassend die folgenden Schritte:
- (E1): Herstellen des ersten Abschnitts (22) der Schaufel (21), der sich am Fuß (21d) der Schaufel (21) erstreckt und der durch den ersten Werkstoff gebildet wird, welcher die durch die erste Matrix verdichtete erste Faserverstärkung umfasst,
- (E2): Herstellen des zweiten Abschnitts (23) der Schaufel (21), der sich an der Spitze (21c) der Schaufel (21) erstreckt und der durch den zweiten Werkstoff gebildet wird, welcher die durch die zweite Matrix verdichtete zweite Faserverstärkung umfasst, wobei der zweite Werkstoff eine geringere Abriebfestigkeit als der erste Werkstoff aufweist, die erste Faserverstärkung und die zweite Faserverstärkung durch einen gleichen Faservorformling (6) gebildet sind und die erste Matrix und die zweite Matrix eine unterschiedliche Zusammensetzung aufweisen, wobei die zweite Matrix eine geringere Abriebfestigkeit als die erste Matrix aufweist und der zweite Abschnitt (23) eine Höhe (H₂₃) zwischen 1 % und 10 % der Höhe (H₂₁) der Schaufel (21) und bevorzugt zwischen 2 % und 5 % der Höhe der Schaufel aufweist.

6. Verfahren nach Anspruch 5, bei dem der erste Abschnitt (22) durch Verdichtung eines ersten Bereichs (61) des Faservorformlings (6), welcher die erste Faserverstärkung bildet, mit der ersten Matrix hergestellt wird, wobei sich der erste Bereich (61) an einem ersten Ende (6a) des Faservorformlings (6) erstreckt, das dem Fuß (21d) der Schaufel (21) entspricht, und wobei der zweite Abschnitt (23) durch Verdichtung eines zweiten Bereichs (62) des Faservorformlings (6), welcher die zweite Faserverstärkung bildet, mit der zweiten Matrix hergestellt wird, wobei sich der zweite Bereich (62) an einem zweiten Ende (6b) des Faservorformlings (6) erstreckt, das der Spitze (21c) der Schaufel (21) entspricht.

7. Verfahren nach Anspruch 6, bei dem der Faservorformling (6) durch die erste Matrix über seine gesamte Länge verdichtet wird, dann die erste Matrix an dem zweiten Bereich (62) des Faservorformlings (6) entfernt wird, anschließend der zweite Bereich (62) des Faservorformlings (6) nach dem Entfernen der ersten Matrix mit der zweiten Matrix verdichtet wird.

## Claims

1. A composite material blade (21) for a fan (2) of a turbine engine (1), the blade (21) comprising a first portion (22) that extends to the root (21d) of the blade (21) and that is made of a first material comprising a first fiber reinforcement densified by a first matrix, the blade (21) also comprising a second portion (23) that extends to the tip (21c) of the blade (21) and that is made of a second material that is different from the first material and that comprises second fiber reinforcement densified by a second matrix, **characterized in that** the second material possesses abrasion resistance that is less than that of the first material, **in that** the first fiber reinforcement and the second fiber reinforcement are made by a single fiber preform (6), **in that** the first matrix and the second matrix possess different compositions, and the second matrix possesses abrasion resistance that is less than that of the first matrix and **in that** the second portion (23) has a height (H₂₃) lying in the range 1% to 10% of the height (H₂₁) of the blade (21), and preferably in the range 2% to 5% of the height of the blade.

2. A turbine engine (1) having a fan (2) that includes a blade (21) according to claim 1.

3. A turbine engine (1) according to claim 2, wherein said turbine engine (1) has a fan casing (4) with an internal annular surface that possesses abrasion resistance that is greater than that of the second material.

4. A turbine engine (1) according to any one of claims 2 or 3, wherein the fan is driven in rotation by a shaft (3), the shaft (3) being secured to the turbine engine (1) by a main bearing, the shaft (3) also being secured to the turbine engine by a decoupler bearing that has a breaking limit that is lower than that of the main bearing.

5. A method of fabricating a blade (21) according to claim 1 comprising the following steps:
- (E1): fabricating the first portion (22) of the blade (21) that extends to the root (21d) of the blade (21) and that is made of the first material that comprises the first fiber reinforcement densified by the first matrix;
- (E2): fabricating the second portion (23) of the blade (21) that extends to the tip (21c) of the blade (21) and that is made of the second material that comprises the second fiber reinforcement densified by the second matrix, the second material possessing abrasion resistance that is less than that of the first material, the first fiber reinforcement and the second fiber reinforcement being made by a single fiber preform and the first matrix and the second matrix possess different compositions, the second matrix possessing abrasion resistance that is less than that of the first matrix and the second portion (23) having a height (H₂₃) lying in the range 1% to 10% of the height (H₂₁) of the blade (21), and preferably in the range 2% to 5% of the height of the blade.

6. A method according to claim 5, wherein the first portion (22) is fabricated by densifying a first zone (61) of the fiber preform (6) forming the first fiber reinforcement with the first matrix, the first zone extending to a first end (6a) of the fiber preform (6) that corresponds to the root (21d) of the blade (21), and wherein the second portion (23) is fabricated by using the second matrix to densify a second zone (62) of the fiber preform (6) forming the second fiber reinforcement, the second zone (62) extending to a second end (6b) of the fiber preform (6) that corresponds to the tip (21c) of the blade (21).

7. A method according to claim 6, wherein the fiber preform (6) is densified by a first matrix over its entire length, and then the first matrix is eliminated over the second zone (62) of the fiber preform (6), then said second zone (62) of said fiber preform (6) is densified with the second matrix after eliminating the first matrix.
